# EUROPÄISCHE PATENTANMELDUNG

(11) **EP 2 699 033 A1**
(43) Veröffentlichungstag der Anmeldung: **19.02.2014**
(21) Anmeldenummer: 12178884.8
(22) Anmeldetag: 01.08.2012
(51) Int. Cl.: H04W 12/08

(54) **Mobile Kommunikationsvorrichtungs mit einem unsicheren Anwendungsspeicher und einem sicheren Datenspeicher**

(71) Anmelder: Secunet Security Networks Aktiengesellschaft, 45128 Essen (DE)
(72) Erfinder: Wappenschmidt, Armin, 21029 Hamburg (DE)
(74) Vertreter: Rohmann, Michael

(57) **Zusammenfassung**

Mobile Kommunikationsvorrichtung, wobei die Kommunikationsvorrichtung zumindest einen unsicheren Anwendungsdatenspeicher und zumindest einen sicheren Datenspeicher aufweist, wobei ein Schlüssel in dem sicheren Datenspeicher gespeichert ist. In dem Anwendungsdatenspeicher gespeicherte Daten sind mit dem Schlüssel verschlüsselt bzw. verschlüsselbar, wobei der Schlüssel in einem Bereich des sicheren Datenspeichers hinterlegt ist, welcher Bereich ausschließlich nach einer Authentifikation zugänglich und/oder auslesbar ist. Der sichere Datenspeicher beinhaltet eine Sicherheitslogik, mit welcher Sicherheitslogik unautorisierte Zugriffe auf den sicheren Datenspeicher detektierbar sind, wobei die Sicherheitslogik bei einem nicht authentifizierten Zugriff auf den in dem sicheren Datenspeicher hinterlegten Schlüssel weitere Zugriffe auf den sicheren Datenspeicher blockiert.

## Beschreibung

Die Erfindung betrifft eine mobile Kommunikationsvorrichtung.

Mobile Kommunikationsvorrichtungen, beispielsweise Smartphones, sind aus der Praxis grundsätzlich bekannt. Diese verfügen über Speichereinrichtungen, in denen vertrauliche Daten speicherbar sind. Bei einem Verlust des Smartphones ist es möglich, dass eine nicht autorisierte Instanz auf den Speicher des Smartphones zugreifen möchte. Zur Absicherung der in dem Speicher vorrätig gehaltenen Daten werden diese mit einem Schlüssel verschlüsselt, welcher Schlüssel wiederum mit einer von dem Nutzer des Smartphones einzugebenden Nummer (PIN) verschlüsselt wird. Wird das Smartphone nun von einem nicht autorisierten Benutzer ausgeschaltet, so kann er dieses an einen Rechner anschließen und den Smartphone-Speicher auslesen. Die von dem Nutzer einzugebende PIN kann der Angreifer mit einer sogenannten "Brute-Force-Attacke" herausfinden, um damit letztlich an den symmetrischen Schlüssel für die Verschlüsselung des Smartphone-Speichers zu gelangen. Im Rahmen der Brute-Force-Attacke wird der Schlüssel durch Ausprobieren der PIN ermittelt. Nachteilig bei den aus der Praxis bekannten Kommunikationsvorrichtungen ist, dass aufgrund technischer Vorgaben und der eingeschränkten Nutzbarkeit der auf Displays simulierten Tastaturen kurze und einfache Passwörter bzw. PINs verwendet werden. Dies vereinfacht die Ausführung der Brute-Force-Attacke, so dass die Daten in den Speichern der aus der Praxis bekannten Kommunikationsvorrichtungen in 10 bis 30 Minuten entschlüsselt werden können.

Der Erfindung liegt daher das technische Problem zugrunde, eine mobile Kommunikationsvorrichtung der vorstehend genannten Art anzugeben, die sich durch ein hohes Sicherheitsniveau auszeichnet und bei der selbst bei einem unautorisierten Auslesen von verschlüsselten Daten eine Entschlüsselung der Daten nicht bzw. nur mit hohem Aufwand möglich ist.

Zur Lösung des technischen Problems lehrt die Erfindung eine mobile Kommunikationsvorrichtung, wobei die Kommunikationsvorrichtung zumindest einen unsicheren Anwendungsdatenspeicher und zumindest einen sicheren Datenspeicher aufweist, wobei ein Schlüssel in dem sicheren Datenspeicher gespeichert ist, wobei in dem Anwendungsdatenspeicher gespeicherte Daten mit dem Schlüssel verschlüsselt sind bzw. verschlüsselbar sind, wobei der Schlüssel in einem Bereich des sicheren Datenspeichers hinterlegt ist, welcher Bereich ausschließlich nach einer Authentifikation zugänglich und/oder auslesbar ist, wobei der sichere Speicher eine Sicherheitslogik beinhaltet, mit welcher Sicherheitslogik unautorisierte Zugriffe auf den sicheren Datenspeicher detektierbar sind und wobei die Sicherheitslogik bei einem nicht authentifizierten Zugriff auf den in dem sicheren Datenspeicher hinterlegten Schlüssel weitere Zugriffe auf den sicheren Datenspeicher blockiert. Die mobile Kommunikationsvorrichtung ist vorzugsweise ein mobilfunkfähiges Gerät. Es ist möglich, dass der unsichere Anwendungsdatenspeicher von einer externen Instanz, beispielsweise einem Computer, auslesbar ist, wenn die Kommunikationsvorrichtung deaktiviert bzw. ausgeschaltet ist. In besonders vorteilhafter Weise umfasst der ausschließlich nach einer Authentifikation zugängliche und auslesbare Bereich des sicheren Datenspeichers den vollständigen bzw. im Wesentlichen vollständigen sicheren Datenspeicher. Es ist möglich, dass der in dem sicheren Datenspeicher hinterlegte Schlüssel mit einem Authentisierungscode bzw. mit einer persönlichen Identifikationsnummer (PIN) verschlüsselt ist. Dass der Bereich des sicheren Datenspeichers ausschließlich nach einer Authentifikation zugänglich und auslesbar ist, meint im Rahmen der Erfindung, dass ein Nutzer eine Berechtigung nachweisen muss, um auf den in dem Bereich des sicheren Datenspeichers hinterlegten Schlüssel zugreifen zu können. Ein nicht authentifizierter Zugriff liegt vor, wenn die Berechtigung zum Zugreifen auf den Bereich des sicheren Datenspeichers, in dem der Schlüssel abgelegt ist, nicht nachgewiesen oder nicht korrekt nachgewiesen wurde.

Gemäß einer Ausführungsform ist der Zugriff auf den sicheren Speicher von der Sicherheitslogik blockiert bzw. blockierbar, wenn eine vorgegebene Anzahl fehlerhafter Authentifikationen überschritten ist. Auf diese Weise wird ausgeschlossen, dass eine Brute-Force-Attacke zur Ermittlung des Schlüssels erfolgreich ausführbar ist. Ein Ermitteln des Schlüssels durch Ausprobieren der Authentifikation ist lediglich in dem Rahmen der durch die Sicherheitslogik erlaubten Anzahl an Authentifikationen möglich. Es empfiehlt sich, dass die Sicherheitslogik ein Auslesen des Schlüssels dauerhaft und/oder irreversibel blockiert, wenn die von der Sicherheitslogik vorgegebene bzw. erlaubte Anzahl fehlerhafter Authentifikationen überschritten ist. Besonders bevorzugt weist die Sicherheitslogik einen Fehleingabezähler auf. Mit dem Fehleingabezähler wird die Anzahl der fehlerhaften Authentifikationen ermittelt. Zweckmäßigerweise sperrt die Sicherheitslogik die Möglichkeit einer Authentifikation, wenn beispielsweise dreimal eine fehlerhafte Authentifikation beispielsweise durch einen Nutzer ausgeführt wurde.

Gemäß einer Ausführungsform ist die Authentifikation als Passwortabfrage ausgebildet. Vorteilhafterweise wird bei der Passwortabfrage ein Passwort mit n Zeichen abgefragt, wobei n eine natürliche Zahl ist. Das im Rahmen der Authentifikation abgefragte Passwort ist insbesondere eine persönliche Identifikationsnummer (PIN). Es hat sich als vorteilhaft herausgestellt, dass die PIN aus vier Zeichen, vorzugsweise Ziffern gebildet ist. Grundsätzlich ist es möglich, dass die PIN aus einer Mischung von Ziffern und/oder Buchstaben gebildet ist.

Gemäß einer bevorzugten Ausführungsform ist der sichere Datenspeicher in einem aus der Kommunikationseinrichtung entfernbaren Speichermodul angeordnet. Vorzugsweise ist das Speichermodul ein Teilnehmeridentitätsmodul (Subscriber Identity Modul, SIM). Es liegt im Rahmen der Erfindung, dass das Speichermodul als Mini-SIM-Karte, Micro-SIM-Karte oder Nano-SIM-Karte ausgebildet ist. Gemäß einer Ausführungsform ist eine Nutzung der Kommunikationsvorrichtung nicht möglich, wenn das Speichermodul nicht mit der Kommunikationsvorrichtung verbunden ist bzw. nicht in der Kommunikationsvorrichtung angeordnet ist.

Zweckmäßigerweise ist der Schlüssel in dem Anwendungsdatenspeicher hinterlegt, wobei der in dem Anmeldungsdatenspeicher hinterlegte Schlüssel vorzugsweise mit einer Sicherungsnummer verschlüsselt ist, welche Sicherungsnummer m Zeichen aufweist, wobei m eine natürliche Zahl ist und wobei m größer als n ist. Es empfiehlt sich, dass die Sicherungsnummer aus einer Kombination von Ziffern und/oder Buchstaben und/oder Sonderzeichen gebildet ist. Es liegt im Rahmen der Erfindung, dass die Sicherungsnummer empfohlenermaßen zumindest sechs, zweckmäßigerweise zumindest acht und besonders bevorzugt zumindest zwölf Zeichen, vorzugsweise Ziffern aufweist. Durch die verschlüsselte Speicherung des Schlüssels in dem Anmeldungsdatenspeicher ist es für den Nutzer der Kommunikationsvorrichtung möglich, den Anwendungsdatenspeicher auch dann auszulesen, wenn der sichere Datenspeicher beschädigt ist und/oder der Zugang zu dem sicheren Datenspeicher aufgrund fehlgeschlagener Authentifikationen nicht mehr möglich ist. Gemäß einer Ausführungsform ist der in dem unsicheren Anwendungsdatenspeicher hinterlegte Schlüssel mit Hilfe der dem Nutzer bekannten Sicherungsnummer bestimmbar, so dass die verschlüsselten Daten entschlüsselbar sind.

Auf diese Weise wird sichergestellt, dass ein Entschlüsseln der in dem Anwendungsdatenspeicher gespeicherten, vorzugsweise verschlüsselten Daten ohne Kenntnis des Schlüssels und/oder der Sicherungsnummer nicht möglich ist. Dadurch, dass der in dem Anwendungsdatenspeicher gespeicherte Schlüssel gemäß einer bevorzugten Ausführungsform mit der Sicherungsnummer zusätzlich verschlüsselt ist, ist eine Ermittlung des Schlüssels sehr komplex oder sogar ausgeschlossen. Die in dem Anwendungsdatenspeicher gespeicherten Daten sind also vor dem Zugriff durch Dritte zuverlässig geschützt. Grundsätzlich ist es möglich, dass der Schlüssel vorzugsweise mit der PIN und/oder Sicherungsnummer verschlüsselt ausschließlich in dem sicheren Datenspeicher gespeichert ist.

Es ist möglich, dass der Anwendungsdatenspeicher aus der Kommunikationseinrichtung entfernbar ist. Beispielsweise ist der Anwendungsdatenspeicher als Secure Digital Memory Card (SD-Card) ausgebildet. Selbst wenn ein Dritter die vorzugsweise verschlüsselten Daten durch Entwenden des Anwendungsdatenspeichers oder durch Entwendung der Kommunikationsvorrichtung erhält, ist eine Entschlüsselung der Daten praktisch ausgeschlossen, da gemäß einer bevorzugten Ausführungsform der in dem Anwendungsdatenspeicher hinterlegte Schlüssel besonders bevorzugt mit der Entsperrnummer verschlüsselt ist. Eine einfache Brute-Force-Attacke zur Bestimmung des Schlüssels durch Ausprobieren ist dadurch ausgeschlossen bzw. fast ausgeschlossen. Gemäß einer Ausführungsform ist der Anwendungsdatenspeicher irreversibel in die Kommunikationseinrichtung integriert. Der Anwendungsdatenspeicher bildet zweckmäßigerweise einen Teil einer Hardware der Kommunikationsvorrichtung. Es liegt im Rahmen der Erfindung, dass die Kommunikationsvorrichtung einen Anwendungsdatenspeicher aufweist, wobei zumindest ein Teil des Anwendungsdatenspeichers als aus der Kommunikationsvorrichtung entfernbarer Datenspeicher ausgebildet ist und wobei zumindest ein weiterer Teil des Anwendungsdatenspeichers als in die Hardware der Kommunikationsvorrichtung vorzugsweise irreversibel integrierter Teil des Anwendungsdatenspeichers ausgebildet ist.

Empfohlenermaßen ist die mobile Kommunikationsvorrichtung ein Mobiltelefon, vorzugsweise ein Smartphone. Es ist möglich, dass als mobile Kommunikationsvorrichtung beispielsweise ein mobilfunkfähiges Notebook oder ein mobilfunkfähiger Tablett-PC eingesetzt wird.

Der Erfindung liegt die Erkenntnis zugrunde, dass sich die erfindungsgemäße Kommunikationsvorrichtung, die beispielsweise als Smartphone ausgebildet ist, durch ein besonders hohes Sicherheitsniveau auszeichnet. Selbst wenn die erfindungsgemäße Kommunikationsvorrichtung in den Besitz eines nicht authorisierten Dritten gelangt, kann dieser nicht im Rahmen einer Brute-Force-Attacke die in dem unsicheren Anwendungsdatenspeicher abgelegten Daten nutzen. In besonders vorteilhafter Weise ist der Schlüssel zum Entschlüsseln der in dem Anwendungsdatenspeicher hinterlegten Daten in einem sicheren Speicher der Kommunikationsvorrichtung abgelegt. Selbst wenn die Authentifikation zum Zugriff auf den sicheren Datenspeicher ein kurzes und damit wenig Sicherheit bietendes Passwort beinhaltet, ist bedingt durch die limitierte Anzahl an fehlerhaften Eingabemöglichkeiten für das Passwort ein hohes Sicherheitsniveau gewährleistet. Das Aufspüren des Schlüssels durch eine Brute-Force-Attacke auf den sicheren Speicher scheidet aus, weil nach der vorgegebenen, zulässigen Anzahl von Fehleingaben der sichere Datenspeicher gesperrt wird. Danach steht bei der erfindungsgemäßen Kommunikationsvorrichtung lediglich der unsichere Anwendungsdatenspeicher zur Verfügung, aus dem dann der Schlüssel zu bestimmen wäre. Dazu ist es jedoch erforderlich, eine beispielsweise achtstellige Sicherungsnummer in Erfahrung zu bringen, mit der der Schlüssel verschlüsselt ist. Dies ist auch durch den Einsatz von leistungsfähigen Recheneinheiten äußerst aufwendig und fast unmöglich. Im Ergebnis zeichnet sich die erfindungsgemäße Kommunikationsvorrichtung durch ein überraschend hohes Sicherheitsniveau aus.

## Patentansprüche

1. Mobile Kommunikationsvorrichtung, wobei die Kommunikationsvorrichtung zumindest einen unsicheren Anwendungsdatenspeicher und zumindest einen sicheren Datenspeicher aufweist, wobei ein Schlüssel in dem sicheren Datenspeicher gespeichert ist, wobei in dem Anwendungsdatenspeicher gespeicherte Daten mit dem Schlüssel verschlüsselt sind bzw. verschlüsselbar sind, wobei der Schlüssel in einem Bereich des sicheren Datenspeichers hinterlegt ist, welcher Bereich ausschließlich nach einer Authentifikation zugänglich und/oder auslesbar ist, wobei der sichere Datenspeicher eine Sicherheitslogik beinhaltet, mit welcher Sicherheitslogik unautorisierte Zugriffe auf den sicheren Datenspeicher detektierbar sind und wobei die Sicherheitslogik bei einem nicht authentifizierten Zugriff auf den in dem sicheren Datenspeicher hinterlegten Schlüssel weitere Zugriffe auf den sicheren Datenspeicher blockiert.

2. Kommunikationsvorrichtung nach Anspruch 1, wobei der Zugriff auf den sicheren Datenspeicher von der Sicherheitslogik blockiert wird bzw. blockierbar ist, wenn eine vorgegebene Anzahl fehlerhafte Authentifikationen überschritten ist.

3. Kommunikationsvorrichtung nach Anspruch 1 oder 2, wobei die Sicherheitslogik einen Fehleingabezähler aufweist.

4. Kommunikationsvorrichtung nach einem der Ansprüche 1 bis 3, wobei die Authentifikation als Passwortabfrage ausgebildet ist.

5. Kommunikationsvorrichtung nach Anspruch 4, wobei bei der Passwortabfrage ein Passwort mit n Zeichen abgefragt wird, wobei n eine natürliche Zahl ist.

6. Kommunikationsvorrichtung nach einem der Ansprüche 1 bis 5, wobei der sichere Datenspeicher in einem aus der Kommunikationseinrichtung entfernbaren Speichermodul angeordnet ist.

7. Kommunikationsvorrichtung nach Anspruch 6, wobei das Speichermodul ein Teilnehmeridentitätsmodul ist.

8. Kommunikationsvorrichtung nach einem der Ansprüche 1 bis 7, wobei der Schlüssel in dem Anwendungsdatenspeicher hinterlegt ist, wobei der in dem Anwendungsdatenspeicher hinterlegte Schlüssel vorzugsweise mit einer Sicherungsnummer verschlüsselt ist, welche Sicherungsnummer m Zeichen aufweist, wobei m eine natürliche Zahl ist und wobei m vorzugsweise größer als n ist.

9. Kommunikationsvorrichtung nach einem der Ansprüche 1 bis 8, wobei der Anwendungsdatenspeicher aus der Kommunikationsvorrichtung entfernbar ist.

10. Kommunikationsvorrichtung nach einem der Ansprüche 1 bis 8, wobei der Anwendungsdatenspeicher irreversibel in die Kommunikationsvorrichtung integriert ist.

11. Kommunikationsvorrichtung nach einem der Ansprüche 1 bis 10, wobei die mobile Kommunikationsvorrichtung ein Mobiltelefon, vorzugsweise ein Smartphone ist.
